# EUROPEAN PATENT APPLICATION

(11) **EP 2 827 547 A1**
(43) Date of publication of application: **21.01.2015**
(21) Application number: 13306008.7
(22) Date of filing: 15.07.2013
(51) Int. Cl.: H04L 29/06

(54) **Secure data storage in a network cloud**

(71) Applicant: ALCATEL LUCENT, 92100 Boulogne-Billancourt (FR)
(72) Inventor: Raehmer, Silke, 70435 Stuttgart (DE); Kopp, Dieter, 70435 Stuttgart (DE)
(74) Representative: 2SPL Patentanwälte PartG mbB

(57) **Abstract**

Embodiments provide a control apparatus, an application apparatus, a data determination apparatus, methods for coordinating storage, for processing a data packet, and for determining a data packet, and corresponding computer programs. The control apparatus (10) is operable to coordinate storage of a data packet at at least two data storage entities of a communication network (60). The control apparatus (10) comprises a control module (12) operable to determine information related to a segmentation of the data packet into at least two data packet segments. The control module (12) is further operable to determine information related to the at least two different data storage entities (40). The at least two different data storage entities (40) are operable to store the at least two data packet segments. The control apparatus (10) further comprises one or more interfaces (14) operable to communicate the information related to the segmentation and the information related to the at least two data storage entities (40) to an application device (20) and to a determination device (30) for the data packet. The application apparatus (20) and determination apparatus (30) are adapted accordingly.

## Description

### Technical Field

Embodiments relate to communication networks, and more particularly, but not exclusively to, secure data management in network clouds.

### Background

This section introduces aspects that may be helpful in facilitating a better understanding of the inventions. Accordingly, the statements of this section are to be read in this light and are not to be understood as admissions about what is in the prior art or what is not in the prior art.

Due to increasing data demand and the demand for data availability, distributed processing and network clouds are being established more frequently. As distributed resources become available, cloud processing may generally be seen as a cost effective solution.

In some known secure data management solutions, data encryption is used. In these solutions, encryption methods and corresponding encryption parameters may be exchanged between communicating entities. If data is stored in a network, e.g. at data storage entities or intermediate network nodes in a communication path, the data may be stored in an encrypted way. For example, sensor applications may use data encryption and decryption when data is communicated through a network. Sensor applications may also make use of cloud processing and network clouds.

In some solutions, a sensor application may include wireless sensors, which can be used to monitor structures such as: bridges, buildings, and roadways. It should be appreciated that most structures may be monitored by a sensor to collect suitable data relating to data such as: vibrations, temperature, and displacements. Other sensor applications may provide environmental monitoring including, for example: solar radiation, temperature, humidity, and soil moisture. Further sensor applications may relate to vehicle health monitoring including, for example measuring: strain, vibration, temperature, inertial loads, forces and torques.

Some documents relating to sensor networks and cloud processing are:
- Sanjit Kumar Dash et al, "A Survey on Applications of Wireless Sensor Network Using Cloud Computing", International Journal of Computer Science & Emerging Technologies, Volume 1, Issue 4, December 2010.
- Kevin Lee et al, "Extending Sensor Networks into the Cloud using Amazon Web Services", IEEE International Conference on Networked Embedded Systems for Enterprise Applications 2010.
- V. Rajesh et al, "Integration of Wireless Sensor Network with Cloud", International Conference on Recent Trends in Information, Telecommunication and Computing, 2010.
- Kapadia A. et al, "Secure Cloud Computing with Brokered Trusted Sensor Networks", 2010 International Symposium on Collaborative Technologies and Systems (CTS).
- Atif Alamri et al, "A Survey on Sensor-Cloud: Architecture, Applications and Approaches", International Journal of Distributed Sensor Networks, Volume 2013 (2013), Article ID 917923.

### Summary of illustrative Embodiments

Some simplifications may be made in the following summary, which is intended to highlight and introduce some aspects of the various exemplary embodiments, but such simplifications are not intended to limit the scope of the inventions. Detailed descriptions of a preferred exemplary embodiment adequate to allow those of ordinary skill in the art to make and use the inventive concepts will follow in later sections

Various embodiments provide a method and apparatus for providing secure data management. In particular, improved privacy policies for cloud services enable improved privacy, data security, and integrity by segmenting data to protect against compromising the privacy of the data due to a single fault. In other words, embodiments may enable storage of data packet segments at different data storage entities. If a data storage entity is compromised, in many instances only a subset of the data packet segments would be lost, but not the entire data packet.

Embodiments provide a control apparatus. The control apparatus is operable to coordinate storage of a data packet at at least two data storage entities of a communication network. In some embodiments, the control apparatus may be operable to coordinate storage of a data packet within the at least two data storage entities. The communication network may correspond to any communication network comprising the at least two data storage entities and the control apparatus. As will be detailed subsequently, the communication network may further comprise an application apparatus or device or a data determination apparatus or device.

The control apparatus may control data storage in the communication network. The control apparatus comprises a control module, which is operable to determine information related to a segmentation of the data packet into at least two data packet segments. The control module is further operable to determine information related to the at least two different data storage entities. The at least two different data storage entities are operable to store the at least two data packet segments. The control apparatus further comprises one or more interfaces operable to communicate the information related to the segmentation and the information related to the at least two data storage entities to an application device and to a determination device for the data packet.

Embodiments further provide an application apparatus operable to process a data packet for communication with at least two data storage entities of the communication network. The data packet may be provided or transmitted from the data application apparatus or device to the data storage entities or it may be obtained or received by the application apparatus from the data storage entities. Communication of the data packet in the communication network may be carried out using the respective data packet segments.

The application apparatus comprises one or more interfaces operable to receive information related to a segmentation of the data packet and information related to the at least two different data storage entities from a control device. The at least two different data storage entities are operable to store the at least two data packet segments. The one or more interfaces are operable to communicate with the at least two different data storage entities. The application apparatus or device further comprises a processing module.

The processing module may be operable to assemble the data packet using the at least two data packet segments received from the at least two different data storage entities based on the information related to the segmentation of the data packet and the information related to the at least two different data storage entities from the control device. Alternatively or additionally the processing module may be operable to disassemble the data packet into at least two data packet segments for storage at the at least two different data storage entities based on the information related to the segmentation of the data packet and the information related to the at least two different data storage entities from the control device.

As mentioned above, embodiments further provide a data determination apparatus operable to determine a data packet for communication with at least two data storage entities of the communication network.

The data determination apparatus comprises one or more interfaces operable to receive information related to a segmentation of the data packet and information related to at least two different data storage entities from a control device. The at least two different data storage entities are operable to store the at least two data packet segments. The one or more interfaces are operable to communicate with the at least two different data storage entities.

The data determination apparatus further comprises a processing module. The processing module may be operable to assemble the data packet using the at least two data packet segments received from the at least two different data storage entities based on the information related to the segmentation of the data packet and the information related to the at least two different data storage entities from the control device.

Additionally or alternatively the processing module may be operable to disassemble the data packet into at least two data packet segments for storage at the at least two different data storage entities based on the information related to the segmentation of the data packet and the information related to the at least two different data storage entities from the control device.

Embodiments may also provide a system comprising the above control apparatus, application apparatus and data determination apparatus. Embodiments of the control apparatus, the application apparatus and the data determination apparatus may use a network cloud to communicate. Embodiments may provide a concept, which may use a public cloud in a secure and cost effective way, as segmentation is under control of the control apparatus. Embodiments may implement a low cost, secure and high reliable sensor network for a large range of applications. Embodiments may combine a public cloud with an application program including a special control part.

In further embodiments the control module of the control apparatus may be further operable to determine information related to a hopping sequence. The information related to the hopping sequence comprises information on a time sequence of different data storage entities at which a data packet segment is to be stored. The one or more interfaces of the control apparatus is/are then operable to communicate the information related to the hopping sequence to the application device and to the determination device.

Accordingly, in such embodiments the one or more interfaces of the application apparatus are operable to receive information related to a hopping sequence from the control device. The information related to the hopping sequence comprises information on the time sequence of the different data storage entities at which a data packet segment is to be stored. The processing module of the application apparatus is then operable to store or to receive the data packet segments at/from the different data storage entities according to the information related to the hopping sequence. The one or more interfaces of the data determination apparatus are then accordingly operable to receive the information related to the hopping sequence from the control device comprising the information on the time sequence of the different data storage entities at which the data packet segment is to be stored. The processing module of the data determination apparatus is then operable to store or to receive the data packet segments at/from the different data storage entities according to the information related to the hopping sequence.

For example, sensor and actor/actuator data may be protected based on an importance associated with the particular sensor or actor/actuator, and data may be stored in a distributed manner. For example, data may be stored in a networked cloud using a hopping mode. Embodiments may achieve additional security through hopping of the stored data packet segments.

In further embodiments, the control module of the control apparatus is further operable to determine information related to data encryption, decryption, or integrity for the segments of the data packet. The one or more interfaces of the control apparatus are operable to provide the information related to data encryption, decryption, or integrity to the application device or to the determination device. Correspondingly, at the application apparatus the one or more interfaces are operable to receive information related to data encryption, decryption, or integrity for the segments of the data packet from the control device. The processing module of the application apparatus is then further operable to decrypt or integrity check the data packet segments prior to assembly of the data packet based on the information related to data encryption, decryption, or integrity for the segments of the data packet. Additionally or alternatively the processing module may be operable to encrypt or to apply a digital signature to the at least two data packet segments after disassembly of the data packet based on the information related to data encryption, decryption, or integrity for the segments of the data packet.

Accordingly, the one or more interfaces at the data determination apparatus may be operable to receive information related to data encryption, decryption, or integrity for the segments of the data packet from the control device. The processing module at the data determination apparatus may be further operable to decrypt or integrity check the data packet segments prior to assembly of the data packet based on the information related to data encryption, decryption, or integrity for the segments of the data packet. Additionally, or alternatively, the processing module at the data determination apparatus may be operable to encrypt or to apply a digital signature to the at least two data packet segments after disassembly of the data packet based on the information related to data encryption, decryption, or integrity for the segments of the data packet.

In other words, in some embodiments the data packet segments may be encrypted before being stored at the at least two storage devices and additional data security may be provided.

In further embodiments the one or more interfaces of the control apparatus is/are operable to receive information related to an attack from the application device or from the determination device. The control module may then be operable to re-initiate the application device or the determination device upon reception of the information related to the attack.

In line with the above embodiment, the application apparatus may further comprise a control module operable to monitor the processing module and to detect an attack on the processing module. The control module of the application apparatus may be further operable to generate information related to the attack, and, accordingly, the one or more interfaces of the application apparatus may be operable to communicate the information related to the attack to the control device. Moreover, the data determination apparatus may further comprise a control module operable to monitor its processing module and to detect an attack on the processing module. The control module of the data determination apparatus may further be operable to generate information related to the attack. The one or more interfaces may be operable to communicate the information related to the attack to the control device. Embodiments may provide additional security by having a control module monitoring an application apparatus or a data determination apparatus and reporting on a detected attack to the control apparatus.

In further embodiments, the control module of the control apparatus may be further operable to determine information related to backup storage entities for storing backup copies of the data packet segments in the communication network. At the control apparatus the one or more interfaces may be operable to provide the information on the backup storage entities to the application device and to the determination device. Some embodiments may provide additional data security using said backup copies.

Correspondingly the one or more interfaces at the application apparatus may be operable to receive information related to backup storage entities for storing backup copies of the data packet segments in the communication network. The processing module at the application module may be operable to store or to receive the backup copies of the data packet segments at/from the backup storage entities according to the information related to backup storage entities. The one or more interfaces at the data determination apparatus may be operable to receive information related to backup storage entities for storing backup copies of the data packet segments in the communication network. The processing module at the data determination apparatus may be operable to store or to receive the backup copies of the data packet segments at/from the backup storage entities according to the information related to backup storage entities.

Embodiments further provide a method for coordinating storage of a data packet at at least two data storage entities of a communication network. The method comprises determining information related to a segmentation of the data packet into at least two data packet segments and determining information related to the at least two different data storage entities. The at least two different data storage entities are operable to store the at least two data packet segments. The method further comprises communicating the information related to the segmentation and the information related to the at least two data storage entities to an application device and to a determination device for the data packet.

Embodiments further provide a method for processing a data packet for communication with at least two data storage entities. The method comprises receiving information related to a segmentation of the data packet and information related to the at least two different data storage entities from a control device. The at least two different data storage entities are operable to store the at least two data packet segments. The method further comprises communicating with the at least two different data storage entities. The method further comprises assembling the data packet using the at least two data packet segments received from the at least two different data storage entities based on the information related to the segmentation of the data packet and the information related to the at least two different data storage entities from the control device. Additionally or alternatively, the method comprises disassembling the data packet into at least two data packet segments for storage at the at least two different data storage entities based on the information related to the segmentation of the data packet and the information related to the at least two different data storage entities from the control device.

Embodiments further provide a method for determining a data packet for communication with at least two data storage entities of a communication network. The method comprises receiving information related to a segmentation of the data packet and information related to the at least two different data storage entities from a control device. The at least two different data storage entities are operable to store the at least two data packet segments. The method comprises communicating with the at least two different data storage entities. In line with the above, the method further comprises assembling the data packet using the at least two data packet segments received from the at least two different data storage entities based on the information related to the segmentation of the data packet and the information related to the at least two different data storage entities from the control device. Additionally or alternatively the method comprises disassembling the data packet into at least two data packet segments for storage at the at least two different data storage entities based on the information related to the segmentation of the data packet and the information related to the at least two different data storage entities from the control device.

Embodiments further provide a computer program having a program code for performing one or more of the above described methods, when the computer program is executed on a computer or processor. A further embodiment is a computer readable storage medium storing instructions which, when executed by a computer, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which
Fig. 1 illustrates embodiments of a control apparatus, an application apparatus, and a data determination apparatus;
Fig. 2 shows embodiments in a communication network;
Fig. 3 shows an embodiment using a hopping mode;
Fig. 4 shows an embodiment using signatures;
Fig. 5 illustrates a block diagram of a flow chart of an embodiment of a control method;
Fig. 6 shows other embodiments in a communication network;
Fig. 7 illustrates a block diagram of a flow chart of an embodiment of a control method;
Fig. 8 illustrates a block diagram of a flow chart of an embodiment of an application method; and
Fig. 9 illustrates a block diagram of a flow chart of an embodiment of a data determination method.

### Description of Embodiments

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

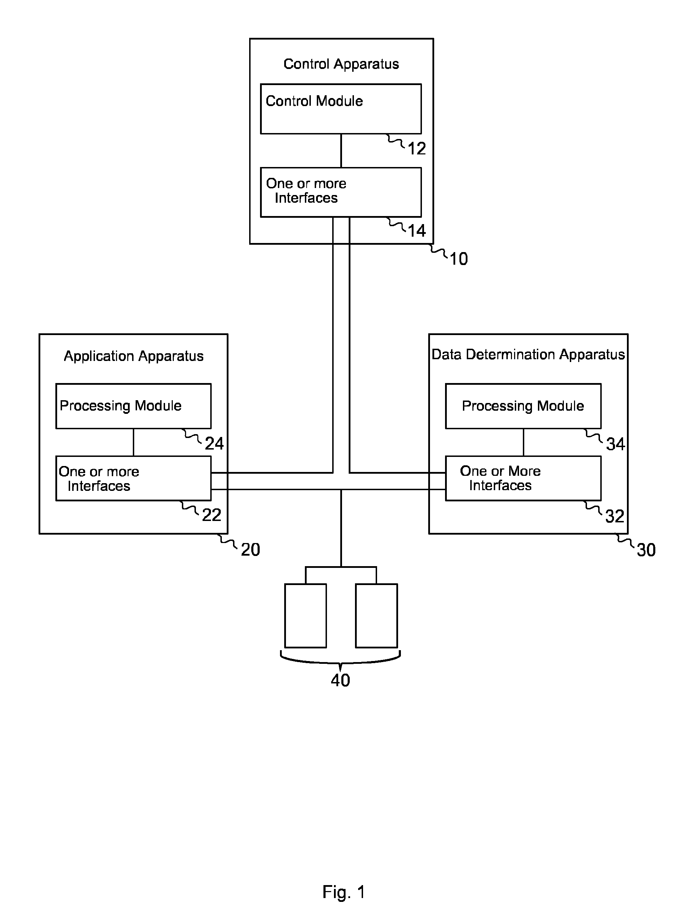

Fig. 1 illustrates an embodiment of a control apparatus or device 10 which is operable to coordinate storage of a data packet at at least two data storage entities 40 of a communication network 60. The control apparatus 10 comprises a control module 12, which is operable to determine information related to a segmentation of the data packet into at least two data packet segments. The control module 12 is further operable to determine information related to the at least two different data storage entities 40 for storing the at least two data packet segments. The control apparatus 10 further comprises one or more interfaces 14, which are coupled to the control module 12, and which are operable to communicate the information related to the segmentation and the information related to the at least two data storage entities 40 to an application device 20 and to a determination device 30 for the data packet.

The control apparatus 10 may be implemented in or be part of any suitable processing device such as: a computer, a server, a Central Processing Unit (CPU), a multi-purpose processor, or the like. Further Embodiments may provide an according processing entity comprising the control apparatus 10.

The communication network 60 may correspond to a cloud network. That is to say that the communication network 60 may use cloud computing. Cloud computing may be considered as a synonym for distributed computing over a network, which may comprise the ability to run a program on many connected computers at the same time, to store data on connected data storage entities 40, respectively. Cloud computing may rely on sharing of resources to achieve multiplexing gains by enabling access to a plurality of interconnected processing and storage resources.

The cloud may improve or estimate a maximization of the effectiveness of shared resources. Cloud resources may be shared by multiple users and may be dynamically re-allocated among the multiple users. For example, a cloud computer network may be used among multiple energy providers to share relevant sensor data. For example, sensor data may provide information indicating power plant operational load at a particular point in time. While each of the respective operators may utilize its own network, i.e. network nodes which are under supervision and control of the respective operator, the respective operators may be interconnected through a network such as, for example, the internet. The resulting interconnection of operators may then be referred to as a network cloud comprising multiple interconnected sub-networks. A cloud network may allow companies to save infrastructure costs.

Within such a network there may be multiple access technologies, such as wired and wireless networks. For example, sensors may be connected to a network's infrastructure in a wired or wireless way, where the access technology may differ across the network. The communication network 60 may hence be an interconnection of multiple processing, storing, sensing, or actuating entities, which may differ in their communication interface between each other. Communication between two entities of such a network may be direct, i.e. through a direct wired or wireless connection, or indirect i.e. through one or more intermediate entities relaying a communication using one or more similar or different wired or wireless connections.

For example, some of the network's entities may be connected via a mobile communication system using a Radio Access Network (RAN). The mobile communication system may, for example, correspond to one of the mobile communication systems standardized by the 3rd Generation Partnership Project (3GPP), e.g. Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms communication system and communication network 60 are used synonymously. Other network entities may be connected using wired links, e.g. a T1- or E1-link, Ethernet, etc. On the higher layers in such a network the Internet Protocol (IP) and the Transmission Control Protocol (TCP) may be used. It is to be noted that these protocols are only examples and there are many other protocols which may be used to establish a communication or cloud network.

The control module 12 of the control apparatus 10 may correspond to any suitable control device for controlling one or more of Application Apparatus 20 or Data Determination Apparatus 30. Control module 12 may be configured in any suitable configuration such as: one or more control units or one or more control devices. In some embodiments the control module 12 may be implemented in software, which is executable on accordingly adapted hardware, such as a processor, a Digital Signal Processor (DSP), a multi-purpose processor, or the like. The control module 12 may determine segmentation information for the data packet. e.g. Segmentation information may include any suitable information including: how the data packet is split or how the data packet's content may be distributed to the at least two segments. In some embodiments, the size of the data packet or the amount of data carried by the data packet may determine the segmentation or the number of segments in which to separate the data packet. For example, if the data packet is to be separated in two segments, then the data may be divided in equal or almost equal shares, which are then separated into the data packet segments.

It should be appreciated that there may be other factors that determine the data share of a data packet segment or the number of segments. For example, a maximum or minimum data amount may be given by a predetermined protocol. The control module 12 may be operable to decide on any segmentation for any given constraints of the communication network 60.

In some embodiments, an interface of an entity may correspond to any interface adapted to the respective communication or access technology. In some embodiments the control apparatus 10 may have different interfaces. For example, the control apparatus may include a first interface operable to communicate with the application device 20 and a second interface operable to communicate with the data determination device. The two interfaces may use the same or different access technologies, protocols, media, etc.

Information related to a certain component or quantity, such as information related to the segmentation of the data packet and information related to the at least two different data storage entities 40, may correspond to information representing the respective component, e.g. an address or identification, or quantity, e.g. instructions on how the data packet is segmented, the size or data amounts of the segments, segment identification or sequence number etc. In embodiments such information may be represented by digital or binary data, and it may generally be communicated using blocks or packets of corresponding digital or binary values. Furthermore, data packets may be represented by blocks or groups of digital or binary values, where a data packet may be composed according to a predefined protocol with corresponding packet headers or tails and payload sections.

Embodiments may support data security such that, for example, private health data may not as easily become public due to fallacy or inaccuracy. Embodiments may improve protection of consumer's privacy. Embodiments may lower a risk of data being lost into a cloud. Sensor data or information having been uploaded into a cloud may more reliably be supervised by a user. Moreover, embodiments may coordinate security using the described control apparatus 10 and a point-to-point communication of security parameters between the application apparatus 20 and the data determination apparatus 30 may be reduced or avoided. For example, a Virtual Private Cloud (VPC), which may include a Virtual Private Network (VPN) as communication channel, when used with a large number of sensors, e.g. a sensor network comprising a million or more entities, may use point-to-point communication between individual entities.

In an embodiment the control apparatus 10 may be located in a secured user domain, e.g. in a private network. It may then control and monitor security from the secured domain. The control apparatus 10 may process a large number of sensors or their data for various applications, such as constructions, e.g. bridge, environment engineering, e. g. weather, water, seismic, traffic capturing, private and public security, e.g. presence sensor up to Closed Circuit TeleVision (CCTV), home automation, energy/utility data processing and related actions. The data may be combined with a time stamp plus sensor IDentification (ID). Such prepared data may dependent on the importance and privacy to be applied and it may be secured using a digital signature or encryption. Hence, encryption control may be done by the user control center 10 using well know methods at the control apparatus 10.

The at least two data storage entities 40 may receive a data push of sensor data and they may offer a data pull of actor information. As will be detailed subsequently data may be stored in a distributed hopping mode, so a data silo 40 may only contain a segment or section of the whole datum or data packet. An attack to a data silo 40 may therefore lead to inconsistent information. In case of an application erase the datum may become invalid.

Fig. 1 further shows an embodiment of an application apparatus or device 20, which is operable to process a data packet for communication with at least two data storage entities 40 of the communication network 60. The application apparatus 20 comprises one or more interfaces 22 operable to receive information related to a segmentation of the data packet and information related to the at least two different data storage entities 40 from the control device 10. The at least two different data storage entities 40 are operable to store the at least two data packet segments. The one or more interfaces 22 are further operable to communicate with the at least two different data storage entities 40. The one or more interfaces 22 are coupled to a processing module 24, which is operable to assemble the data packet using the at least two data packet segments received from the at least two different data storage entities 40 based on the information related to the segmentation of the data packet and the information related to the at least two different data storage entities 40 from the control device 10. Additionally or alternatively, the processing module 24 may be operable to disassemble the data packet into at least two data packet segments for storage at the at least two different data storage entities 40 based on the information related to the segmentation of the data packet and the information related to the at least two different data storage entities 40 from the control device 10.

That is to say, the application apparatus 20 may correspond to a network entity in the communication network 60, which may execute or perform an application such as collecting sensor data or generating instructive information for an actor or actuator at another network entity. In line with what was described above for the one or more interfaces of the control apparatus 10, the application apparatus 20 also comprises one or more accordingly adapted interfaces 22. The one or more interfaces 22 of the application apparatus 20 may be operable to communicate in a wired or wireless manner using accordingly adapted protocols. The one or more interfaces 22 of the application apparatus 20 are further operable to communicate with the at least two different data storage entities 40. In some embodiments the same interface 22 may be used to communicate with the control device 10 and to communicate with the data determination device 30. In other embodiments different interfaces may be used to communicate with the control device 10 and the data determination device 30.

The processing module 24 of the application apparatus 20 may be any suitable device for controlling application apparatus 20 such as: one or more processing units, one or more processing devices, any means for processing, a processor, or the like. In some embodiments the processing module 24 may be implemented in software, which is executable on accordingly adapted hardware, such as a processor, a DSP, a multi-purpose processor, or the like.

In other words, the processing module 24 may assemble or disassemble the data packet. For example, in some applications the application apparatus 20 may generate instructional information for other network entities. Hence, a data packet may be generated, segmented or disassembled, and stored at the at least two data storage entities 40, from where they may be obtained by the respective receiving entity, e.g. a data determination device 30, which may correspond to any data sink, an actuator, an actor, a receiver, or the like. In yet another embodiment the processing module 24 of the application apparatus 20 may assemble or compose the data packet based on data packet segments obtained or received from the respective data storage entities 40. For example, the data may correspond to sensor data, e.g. temperature, pressure, voltage, current, any physical quantity, or transmitter data and the application apparatus 20 may be operable or configured to process the data. In other words, the data determination device or apparatus 30 may obtain the data or data packet using a sensor or data generator and then decompose or segment the data packet into said segments. The processing module 24 of the application apparatus 20 may the assemble or re-compose the data packet prior to further processing based on the data segments obtained using the communication network 60, as is described herein.

In an embodiment, the application apparatus 20 may execute an application program processing sensor data, calculating actor data or alarm signals. The application apparatus 10 may provide a data interface 22 and encryption, access to the storing devices 40, carry out encryption or check for data integrity. A control part may monitor the application execution and data processing, and in case of attack detection, the complete process may be erased and information may be provided to the user control at the control apparatus 10.

Fig. 1 further shows an embodiment of a data determination apparatus or device 30 operable to determine a data packet for communication with the at least two data storage entities 40 of the communication network 60. The term "communication" indicates that the data packet may be provided or transmitted from the data determination apparatus or device 30 to the data storage entities 40 or it may be obtained or received by the data determination apparatus 30 from the data storage entities 40. The data determination apparatus 30 comprises one or more interfaces 32 operable to receive information related to a segmentation of the data packet and information related to at least two different data storage entities 40 from a control device 10. The at least two different data storage entities 40 are operable to store the at least two data packet segments. The one or more interfaces 32 are further operable to communicate with the at least two different data storage entities 40 and they are connected or coupled to a processing module 34. The one or more interfaces 32 of the data determination device 30 may correspond to any of the above mentioned interfaces and may be configured or operable for wired or wireless communication following respective protocols. The processing module 24 may correspond to one or more processing units, one or more processing devices, any means for processing, a processor, etc. In some embodiments the processing module 24 may be implemented in software, which is executable on accordingly adapted hardware, such as a processor, a DSP, a multi-purpose processor, etc.

The processing module 34 is operable to assemble the data packet using the at least two data packet segments received from the at least two different data storage entities 40 based on the information related to the segmentation of the data packet and the information related to the at least two different data storage entities 40 from the control device 10. That is to say that the data determination apparatus 30 may correspond to an entity which makes use of the information carried in the data packet such as: a data sink or destination. For example, the data determination apparatus 30 may correspond to an actor or actuator using instructional information from the data packet, e.g. instructional information comprised in a payload section of the data packet. The data packet may be re-assembled from the segments obtained from the at least two data storage entities 40 before the data determination apparatus 30, or its processing module 34, respectively, uses the information from the data packet.

Additionally or alternatively the processing module 34 is operable to disassemble the data packet into at least two data packet segments for storage at the at least two different data storage entities 40 based on the information related to the segmentation of the data packet and the information related to the at least two different data storage entities 40 from the control device 10. In other words, the data determination device 30 may correspond to a data source, for example, to a sensor unit generating the data packet. As such, any sensor may be comprised in the data determination apparatus 30. Hence the data packet, for example corresponding to sensor data, is then disassembled or de-composed in the data packet segments at the data determination device 30, before the data packets are stored at the at least two different data storage entities 40.

In other words, in an embodiment the data determination apparatus 30 may correspond to a sensor. The sensor 30 may correspond to any kind of sensors, e.g. traffic, environment, constructional, temperature, pressure, etc. Dependent on importance and security level, encryption or signature protection may be used at the data determination apparatus 30, e.g. inclusion of a time stamp, under control of the user control part at the control apparatus 10. Said user control 10 may also control sequence, method and destination of hopping storage. In another embodiment the data determination device 30 may correspond to an actor or actuator which may act in a pull mode similar to the sensors. In case of an attack or when data becomes invalid, the actor 30 may be informed by the user control 10 on the new pull address, i.e. new storage device 40.

Moreover, in some embodiments, the platforms or hardware or network parts on which the respective apparatuses 10, 20, 30 are implemented may be disparate in terms of their access technology, access availability, security level, or the like. For example, the application apparatus 20 may be implemented on a platform in a public part of the network 60, e.g. on some processing capacity accessible through the internet. The control apparatus 10 may, for example, be implemented in a private network, e.g. of an energy provider. The private network may therefore be under control of the energy provider, whereas the application apparatus 20 may not be directly controlled by the energy provider. That is to say that the private network may provide a higher security level as the public network. The private network may have additional measures such as firewalls, restricted number of gateways, a higher level of virus and malware protection etc.

As energy providers may need to share data to enable efficient operation of, for example, a nationwide energy supply, sensor data may be provided to an application 20 of a different provider. In some embodiments the data determination apparatus 30, e.g. generating the sensor data, may also be implemented in the energy provider's private network. The control apparatus 10 may then control the data determination apparatus 30 and the application apparatus 20 through the data segmentation by means of the information how the data is segmented and where it is stored. The energy provider may therewith achieve better or improved control on the sensor data protection and integrity.

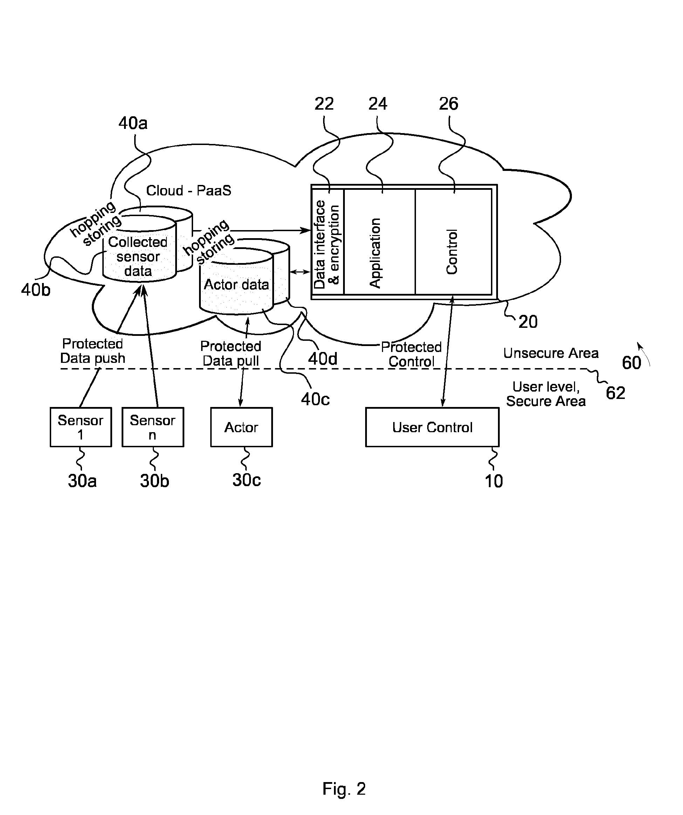

Fig. 2 illustrates a communication network 60, which is implemented as a network cloud and which provides Platform as a Service (PaaS). The dashed line 62 separates an unsecure area above the line 62 from a secure or user level area below the line, e.g. an operator's private network is indicated below the line 62 and a public network is indicated above the line 62. In Fig. 2 an embodiment, which is in line with what is shown in Fig. 1, of the control apparatus 10 is shown as user control 10. Moreover, Fig. 2 shows three embodiments of data determination apparatuses 30a, 30b, and 30c. The data determination apparatuses 30a und 30b are exemplified as sensors 30a, 30b and the data determination apparatus 30c is exemplified as actor 30c, which all reside in the secured area of the network 60. Fig. 2 further illustrates an embodiment of the application apparatus 20, which is located in the unsecure area of the network 60. The application apparatus 20 comprises the one or more interfaces 22, which are implemented as data interface and encryption 22.

Moreover, the processing module 24 is implemented as application software 24. In the embodiment of Fig. 2 the application apparatus further comprises a control part 26, which carries out application attack detection. Fig. 2 further illustrates data storage entities 40a, 40b, 40c, and 40d, which exemplify a plurality of data storage entities comprised in the network 60.

The control module 12 of the control apparatus 10 is further operable to determine information related to a hopping sequence. The information related to the hopping sequence comprises information on a time sequence of different data storage entities, 40a and 40b, as examples for sensors 30a and 30b, 40c and 40d as examples for the actor 30c, at which a data packet segment is to be stored. The one or more interfaces 14 of the user control are operable to communicate the information related to the hopping sequence to the application device 20 and to the determination device 30. Correspondingly, the one or more interfaces 22 of the application apparatus 20 are operable to receive information related to the hopping sequence from the control device 10 and the processing module 24 of the application apparatus is operable to store or to receive the data packet segments at/from the different data storage entities 40a, 40b, 40c, and 40d, according to the information related to the hopping sequence. Moreover, the one or more interfaces 32 of the determination devices 30a, 30b, and 30c, i.e. the two sensors 30a and 30b and the actor 30c, are operable to receive the information related to the hopping sequence from the user control 10. The processing modules 34 at the determination apparatuses 30a, 30b, and 30c, are operable to store or to receive the data packet segments at/from the different data storage entities 40a, 40b, 40c, and 40d, according to the information related to the hopping sequence.

That is to say that a certain segment of a data packet may not be statically stored at a certain data storage entity 40a, 40b, 40c, 40d, but rather moves or hops across multiple data storage entities 40a, 40b, 40c, 40d in the network 60. The time scale of the hopping sequence, i.e. the time a respective data packet segment rests at a certain data storage entity 40a, 40b, 40c, 40d, can be in the order of milliseconds, seconds or minutes. The time scale may be uniform, i.e. the same amounts of time, which are used at different data storage entities 40a, 40b, 40c, 40d for storing a data packet segment, may be equal. In some embodiments the time scale may be varying and information related to how long a certain segment is to be stored at a data storage entity 40a, 40b, 40c, 40d may be determined at the control apparatus 10 and provided along with the information on the segmentation.

In some embodiments, the segments of a data packet may use the same time scale, where in other embodiments, the time scales of segments of the same data packet may differ. Moreover, the time scales of the segments of different data packets may be equal or they may differ. Having different time scales for the segments of different data packets may provide further data protection as even if one time scale is known, compromised, or sacrificed; time scales of segments of other data packets would still be unknown.

A hopping sequence may be random or pseudo-random and may be generated systematically at the control apparatus 10. Independent of the nature of the hopping sequence, the hopping sequence is generated at the control apparatus 10, which may therefore have full control on the data. The specifics of the time hopping sequence may, in some embodiments, correspond to the hopping sequences and properties used in frequency hopping spread spectrum techniques. In other words, embodiments may use a random frequency spectrum in a time hopping manner as in frequency hopping in spread spectrum. Analogously, a random sequence of data storage entities 40a, 40b, 40c, 40d may be used in embodiments.

Hence, a data packet may be segmented and the segments may then be stored at separated locations in some embodiments. Communication of the data packet in a communication network is carried out using the respective data packet segments. Embodiments may therewith provide enhanced data security as a complete data packet may not be overheard or eavesdropped while in transit as it may always be communicated in or distributed to separate segments.

Furthermore, the location of a data packet segment may change, e.g. the segment may hop across multiple storage locations in a way that knowledge of the corresponding hopping sequence allows finding all segments of a segmented data packet. Increased data security may be applied since if one location is attacked, infiltrated, or compromised, a complete data packet may not be available from a single location or a single data storage entity.

Advantageously, processing of a large number of sensors 30a, 30b, for various applications may be carried out for applications, such as for constructions, environment engineering, private and public security. Some applications may relate to monitoring data of bridges, weather, water, seismic, traffic capturing, presence sensing up to CCTV, home automation, energy/utility data processing and related actions. In an embodiment the data is combined with a time stamp plus a sensor ID. Such prepared data may depend on the importance and privacy to be secured and a digital signature or encryption can be used. In the embodiment encryption control is done by the user control center 10 using well known methods.

In an embodiment the control module 12 of the user control 10 is further operable to determine information related to data encryption, decryption, or integrity for the segments of the data packet and the one or more interfaces 14 of the user control 10 are operable to provide the information related to data encryption, decryption, or integrity to the application device 20 or to the determination device 30. Correspondingly, the one or more interfaces 22 of the application 20 are operable to receive information related to data encryption, decryption, or integrity for the segments of the data packet from the user control 10. The processing module 24 of the application 20 is further operable to decrypt or integrity check the data packet segments prior to assembly of the data packet based on the information related to data encryption, decryption, or integrity for the segments of the data packet, or, alternatively or additionally, the processing module 24 is operable to encrypt or to apply a digital signature to the at least two data packet segments after disassembly of the data packet based on the information related to data encryption, decryption, or integrity for the segments of the data packet.

The one or more interfaces 32 of the data determination apparatuses 30a, 30b, and 30c, are operable to receive information related to data encryption, decryption, or integrity for the segments of the data packet from the user control 10. The processing module 34 is further operable to decrypt or integrity check the data packet segments prior to assembly of the data packet based on the information related to data encryption, decryption, or integrity for the segments of the data packet, or, additionally or alternatively the processing module 24 is operable to encrypt or to apply a digital signature to the at least two data packet segments after disassembly of the data packet based on the information related to data encryption, decryption, or integrity for the segments of the data packet.

The conditions, properties or information for the encryption and decryption may be evaluated or determined at the control apparatus 10. For example, the control apparatus 10 may determine encryption keys, algorithms, certificates etc. and provide according information to the application and data determination apparatuses 20, 30, which may then perform the actual encryption/decryption operations depending on where the data packet is assembled or disassembled in line with the above description. Furthermore, data verification may be enabled, e.g. by using a checksum algorithm such as Cyclic Redundancy Check (CRC), a digital signature, a watermark, etc. Hence, the respective receiver, i.e. the entity which assembles the data packet, may be enabled to check the integrity of the data packet segments or the data packet as a whole, respectively.

As indicated by the embodiments of Fig. 2, storing a data packet in a cloud environment may become very sensitive, independent of a public or private cloud. In the present embodiment segmentation of data and storage in a hopping mode is used, which is also indicated in Fig. 2 by the term "hopping storing". Each datum or data packet, e.g. sensor value, time stamp, sensor ID, signature, is split in segments and stored at different location in the grid, i.e. at different data storage entities 40; i.e. data storage entities 40a and 40b for sensor 30a, 30b data segments, and 40c, 40d for actor 30c data segments. In some embodiments a data stream may be split and stored at different locations in the cloud. A data segment may then correspond to data packet from a block of stream data. With either of these variants none of the data containers 40a, 40b, 40c, or 40d, has constant sensor values. The hopping locations or the hopping sequence could, for example, be defined in sequence or pseudo random.

As indicated in Fig. 2 sensor 30a, 30b and actor 30c data may use the same method or concept, both controlled by the user control 10. Sensor 30a, 30b data may be in push mode, actor 30c data access may be in pull mode. That is to say that a sensor 30a, 30b may determine sensor data, segment it and proactively store the data packet segments at the data storage entities 40a and 40b. An actuator 30c may proactively request data segments from the data storage entities 40c and 40d, re-assemble the data packet and then further process the data packet.

As shown in Fig. 2 the application or application program 20 comprises three elements, the processing module 24 with the application itself, the control 26 of the application and the storage interface 22. The storage interface 22 may access the cloud storage containers 40a, 40b, 40c, and 40d, in the hopping mode to collect or store the segmented data. It may further check a digital signature and carry out encryption. The application control 26 may check for any attacks. In other words, in an embodiment the application apparatus 20 further comprises the control module 26, which is operable to monitor the processing module 24 and to detect an attack on the processing module 24. The control module 26 may be further operable to generate information related to the attack. The one or more interfaces 22 at the application apparatus can be operable to communicate the information related to the attack to the user control 10.

Once an attack is detected according measures can be taken by the control apparatus 10, to which it is also referred to as user control 10, and which may provide overall control of the data storage. Correspondingly, the data determination apparatus 30 may further comprise a control module 36, which is operable to monitor its processing module 34 and to detect an attack on the processing module 34. The control module 36 may then be further operable to generate information related to the attack. The one or more interfaces 32 may then be operable to communicate the information related to the attack to the user control 10. The user control 10 may use its one or more interfaces 14 to receive the information related to the attack from the application device 20 or from the determination device 30. The control module 12 is may then be operable to re-initiate the application device 20 or the determination device 30 upon reception of the information related to the attack. The control module 26, 36 of the application apparatus 20 or of the data determination apparatus 30 may correspond to one or more control units, one or more control devices, any means for controlling, a controller, etc. In some embodiments a control module 26, 36 may be implemented in software which is executable on accordingly adapted hardware, such as a processor, a DSP, a multi-purpose processor, etc.

The control apparatus 10 may control the application and data determination apparatuses 20, 30. The application and data determination apparatuses 20, 30 may operate control instances, which communicate with the control apparatus 10. For example, an application may be executed on a processor in a public network. The processor may be monitored by an application control instance, e.g. registers, memory, instruction counters etc. may be monitored additionally to the optional data integrity check. If any unexpected development occurs an attack may be detected and the application control may inform the control apparatus 10, which may then take corresponding counter measures, for example, it may reset or boot the respective processor and re-initiate the application 20.

Similar measures can be taken with respect to the data determination device 30, which may have a control instance itself or it may be directly controlled by the control apparatus 10. For example, the data determination device 30 corresponds to a temperature sensor, which provides data to the storage devices 40 in the public internet. The temperature sensor is connected or coupled to the control apparatus 10 using a private network of an operator. Hence, communication between the control apparatus 10 and the data determination apparatus 30 can be assumed to be safe. If an application detects an integrity failure of a data packet from the temperature sensor the control apparatus 10 may reset or re-initiate the sensor. The application may also provide information on new data storage entities 40 for the data segments, a new hopping sequence, or new encryption measures to preclude or circumvent any intermediate data manipulation. In a similar way the corresponding application apparatus 20 can be informed.

There are multiple ways on how a data attack can be detected. For example, validation of the sensor values can be used in case of an attack to a sensor 30a or 30b. In some embodiments the user control 10 may switch off the attacked sensor 30a or 30b or inform maintenance to replace the attacked sensor. In some embodiments segmented data destruction may be detected using integrity check or other validation techniques. Dependent on the data importance and number of destructions, single or multiple back-up segments can be used or defined, in some embodiments using a dynamic process.

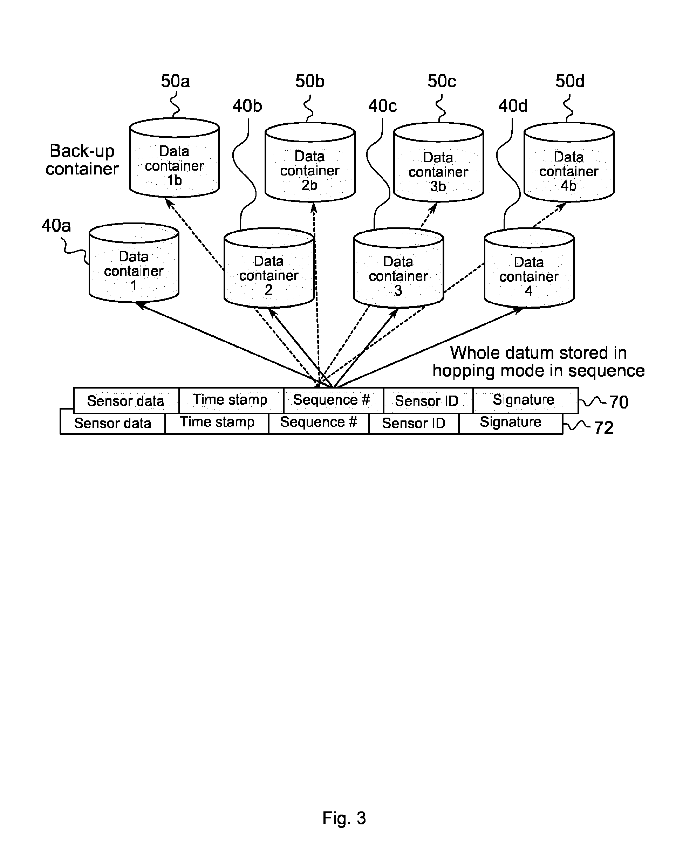

Fig. 3 illustrates further embodiments using data segment backup. In this embodiment the control module 12 at the control apparatus 10 is further operable to determine information related to backup storage entities 50, which are exemplified as data containers 50a-d in Fig. 3, for storing backup copies 72 of the data packet segments 70 in the communication network 60. That is to say that some embodiments may store multiple copies of a data segment at different data storage entities 50, 60 and the achieved redundancy may be used to retrieve data segments, which are lost, determined to be manipulated, or failed on an integrity check, etc. Some embodiments may provide additional data security using said backup copies. Some embodiments may use error correction coding, e.g. Reed Solomon coding, such that, for example, a data packet is segmented in three segments, two of which would be sufficient to restore the original data packet.

In Fig. 3 two data packet segments 70, 72 are shown with some details on the structure and information comprised in a data segment in some embodiments. In the embodiment data segment 72 is a back-up copy of data segment 70. Both data segments comprise sensor data, a time stamp, a sequence number, a sensor ID and a signature. The time stamp may allow the other entities to determine whether a data segment is outdated, e.g. a data segment may have a certain time window in which it is considered valid, which may also be referred as a time to live. The sequence number may allow putting the respective segment at a correct position in a sequence of segments, when the full data packet is re-assembled. The senor ID may allow identifying the corresponding sensor 30 and the signature may allow for performing an integrity check on the data segment. In the embodiment shown in Fig. 3 only one data segment 70 of the data packet is shown together with one backup segment 72.

Fig. 3 depicts that the segments of the data packet are stored in a hopping mode in sequence across data containers 40a, 40b, 40c, and 40d, where only one data segment 70 is used to represent the sequence. The respective backup sequence of data segments, which is represented by backup data segment 72 in Fig. 3, is stored in the same or another sequence across backup data containers 50a, 50b, 50c and 50d. The arrows in Fig. 3 show which data containers are used for the original sequence and for the backup sequence, respectively.

In an embodiment with data segment backup as illustrated in Fig. 3 the one or more interfaces 14 of the user control may be operable to provide the information on the backup storage entities 50 to the application device 20 and to the determination device 30. Correspondingly, the one or more interfaces 22 of the application 20 is/are operable to receive information related to backup storage entities 50 for storing backup copies of the data packet segments in the communication network 60. The processing module 24 of the application may be operable to store or to receive the backup copies of the data packet segments at/from the backup storage entities 50 according to the information related to backup storage entities 50. In line, the one or more interfaces 32 of the data determination apparatus 30 is/are operable to receive information related to the backup storage entities 50 for storing the backup copies of the data packet segments in the communication network 60. The processing module 34 of the data determination apparatus 30 may be operable to store or to receive the backup copies of the data packet segments at/from the backup storage entities 50 according to the information related to backup storage entities 50.

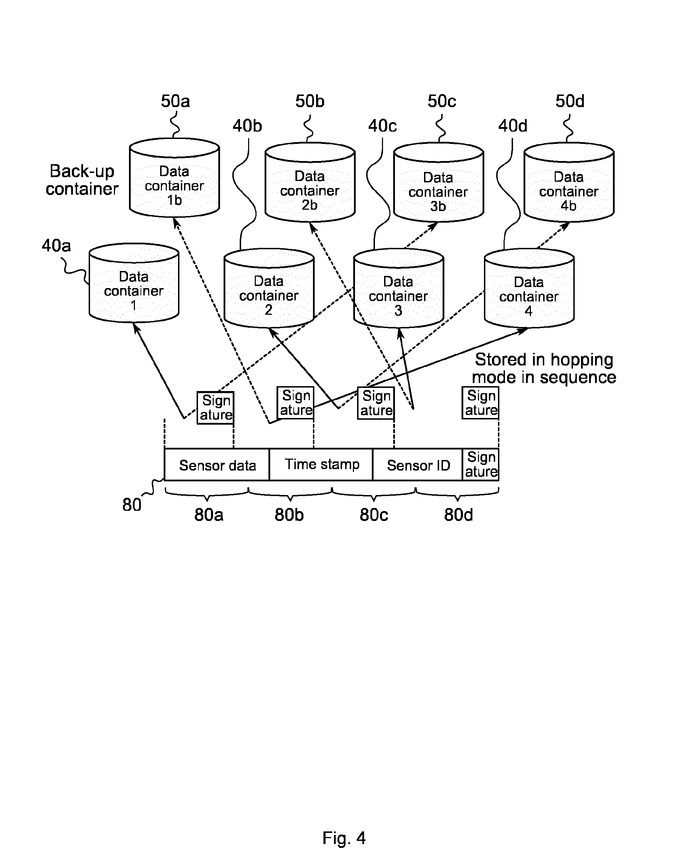

Fig. 4 illustrates another embodiment with data backup, wherein Fig. 4 shows four data containers 40a-d and four backup data containers 50a-d. Fig. 4 further shows a data packet 80, which comprises sensor data, a time stamp, a sensor ID and a signature. As indicated in Fig. 4 the data packet is segmented into four segments 80a-d to each of which is provided with a signature. As indicated by the arrows, for each of the segments a backup copy is stored at one of the backup containers 50a-d. The signatures of the segments allow data verification and in some embodiments these signature may also be used to identify the segments from which data packet 80 can be re-assembled. The embodiments depicted in Figs. 3 and 4 illustrate datum or data segmentation and storing in hopping mode plus back-up.

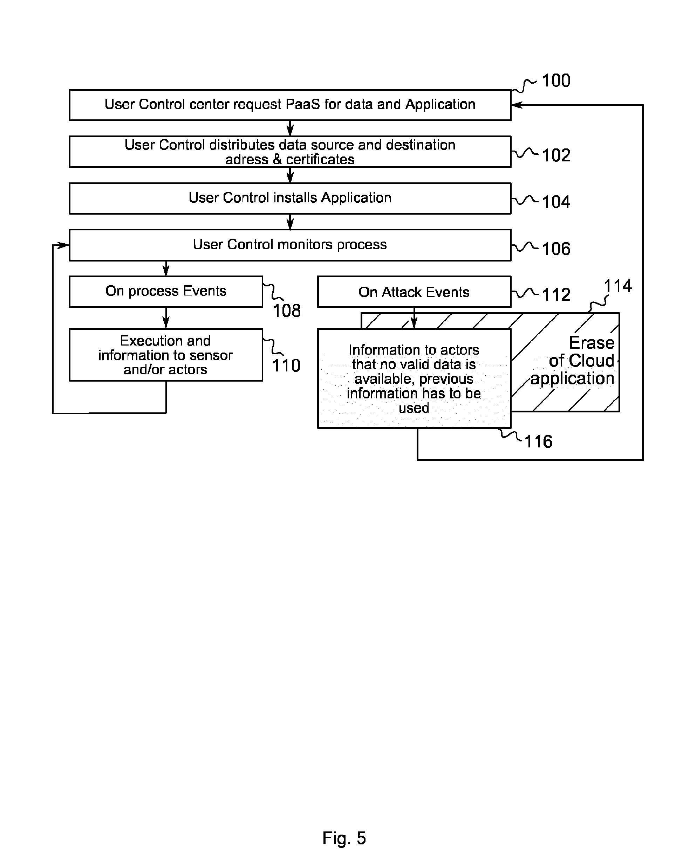

Fig. 5 illustrates a block diagram of a flow chart of an embodiment of a control method. The method shall exemplify the actions of the respective components in an application program attack. In a first action 100 a user control center 10 requests PaaS for data and application. In action 102 the user control 10 distributes data source, e.g. sensors, and destination, e.g. application, addresses and certificates. The user control 10 installs application 20 in action 104 and monitors the process in action 106. In the present embodiment user control 10 and application control 26 permanently check for any attacks by verifying the program execution. In case of any detection the whole application program in the cloud would be erased and newly initiated. This is illustrated in Fig. 5 by action 108 and 110, wherein on process events 108 the user control executes certain procedures and provides information to sensors or actors. On attack events as indicated by action 112 the cloud application is erased by action 114 and information to actors or sensors is provided that no valid data is available and, e.g. previous information should be used as shown in action 116.

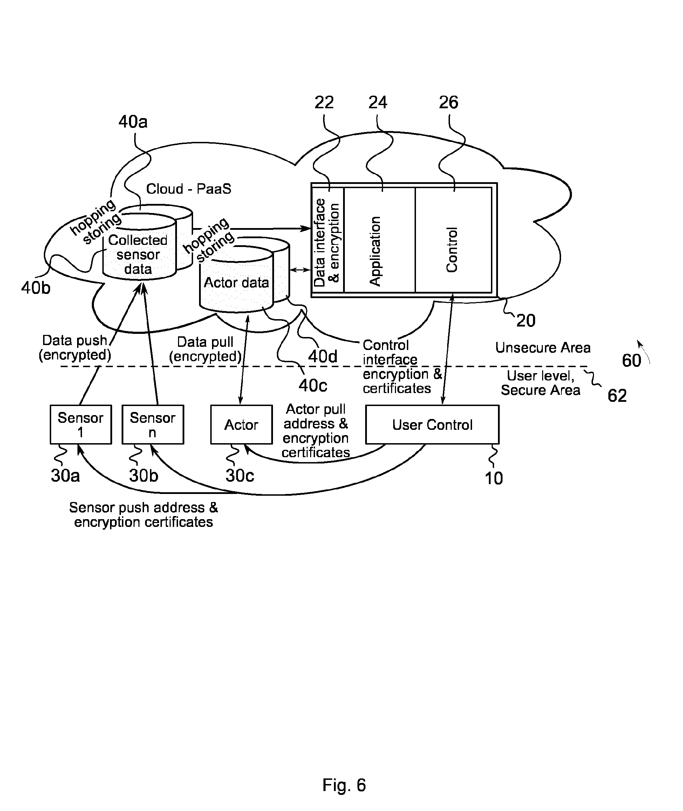

Fig. 6 shows other embodiments in a communication network 60, which is similar to what is illustrated and described for embodiments shown Fig. 2. Fig. 6 depicts a communication network 60, which is implemented as a network cloud and provides PaaS. In line with Fig. 2 the dashed line 62 separates an unsecure area above the line 62 from a secure or user level area below the line, e.g. an operator's private network is indicated below the line 62 and a public network is indicated above the line 62. Fig. 6 further illustrates an embodiment of the control apparatus 10, which is shown as user control 10. Moreover, Fig. 6 shows three embodiments of data determination apparatuses 30a, 30b, and 30c. The data determination apparatuses 30a und 30b are exemplified as sensors and the data determination apparatus 30c is exemplified as actor 30c, which all reside in the secured area of the network 60. Fig. 6 further illustrates the communication between the user control 10 and the data determination apparatuses 30a, 30b, and 30c in the secure area, e.g. on a user level. For example, sensor push addresses and encryption certification may be comprised in the information communicated from the user control 10 to the sensors 30a and 30b.

Fig. 6 further shows that the embodiment of the application apparatus 20 is located in the unsecure area of the network 60. The application apparatus 20 comprises the one or more interfaces 22, which are implemented as data interface and encryption 22. Moreover, the processing module 24 is implemented as application software 24. The application apparatus 20 further comprises a control part 26, which carries out application attack detection. Fig. 6 further illustrates data storage entities 40a, 40b, 40c, and 40d, which exemplify a plurality of data storage entities 40 comprised in the network 60. Fig. 6 shows the overall architecture and process flow description of some embodiments. The user control 10 initiates and monitors the whole cloud application and it also decides on the protection level. The user control 10 may request PaaS on store space and an application program 20 installation. It may further inform sensors 30a, 30b and actor 30c on the protection level, certificates and storage location and method, e.g. hoping sequences. The user control 10 may further control the start of the execution of the application 20 and the execution of the application as well.

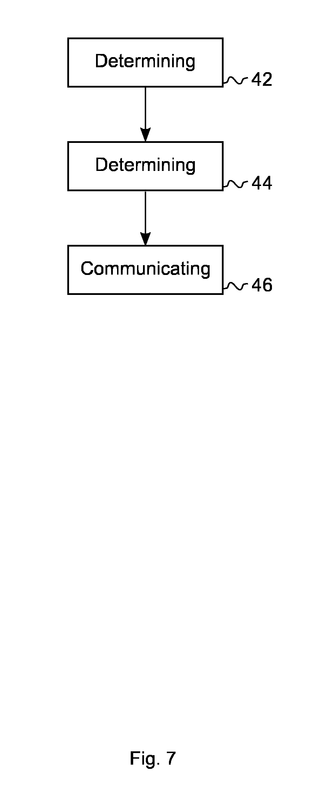

Fig. 7 illustrates a block diagram of a flow chart of an embodiment of a method for coordinating storage of a data packet at at least two data storage entities 40 of a communication network 60. The method comprises determining 42 information related to a segmentation of the data packet into at least two data packet segments. The method further comprises determining 44 information related to the at least two different data storage entities 40. The at least two different data storage entities 40 are operable to store the at least two data packet segments. The method further comprises communicating 46 the information related to the segmentation and the information related to the at least two data storage entities 40 to an application device 20 and to a determination device 30 for the data packet.

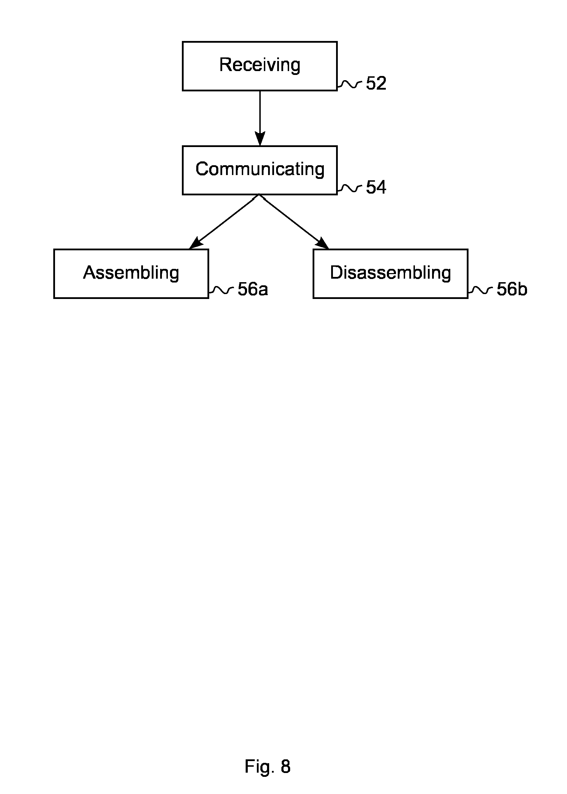

Fig. 8 illustrates a block diagram of a flow chart of an embodiment of an application method for processing a data packet for communication with at least two data storage entities 40 of a communication network 60. The method comprises receiving 52 information related to a segmentation of the data packet and information related to the at least two different data storage entities 40 from the control device 10. The at least two different data storage entities 40 are operable to store the at least two data packet segments from the control device 10. The method comprises communicating 54 with the at least two different data storage entities 40. The method further comprises assembling 56a the data packet using the at least two data packet segments received from the at least two different data storage entities 40 based on the information related to the segmentation of the data packet and the information related to the at least two different data storage entities 40 from the control device 10. Additionally or alternatively the method comprises disassembling 56b the data packet into at least two data packet segments for storage at the at least two different data storage entities 40 based on the information related to the segmentation of the data packet and the information related to the at least two different data storage entities 40 from the control device 10.

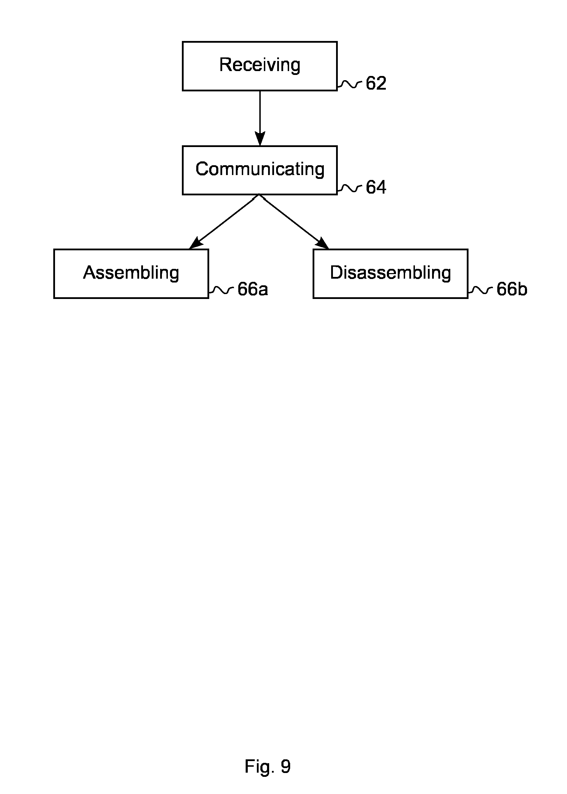

Fig. 9 illustrates a block diagram of a flow chart of an embodiment of a data determination method for determining a data packet for communication with at least two data storage entities 40 of a communication network 60. The method comprises receiving 62 information related to a segmentation of the data packet and information related to the at least two different data storage entities 40 from a control device 10. The at least two different data storage entities 40 are operable to store the at least two data packet segments. The method comprises communicating 64 with the at least two different data storage entities 40. The method comprises assembling 66a the data packet using the at least two data packet segments received from the at least two different data storage entities 40 based on the information related to the segmentation of the data packet and the information related to the at least two different data storage entities 40 from the control device 10. Additionally or alternatively, the method comprises disassembling 66b the data packet into at least two data packet segments for storage at the at least two different data storage entities 40 based on the information related to the segmentation of the data packet and the information related to the at least two different data storage entities 40 from the control device 10.

A further embodiment is a computer readable storage medium storing instructions which, when executed by a computer, cause the computer to implement one of the methods described herein. Other embodiments are a computer program or a computer program product having a program code for performing anyone of the above described methods, when the computer program or computer program product is executed on a processor, computer, or programmable hardware.

Embodiments may provide an efficient and secure concept for cloud processing for a large number of applications. Embodiments may enable the utilization of public clouds by rendering them to a trusted cloud platform. Embodiments may therefore offer a cost effective, reliable, secure solution to handle a large number of sensors, to carry out appropriate processing and enable corresponding actions, e.g. process actors, trigger alarms, etc. Dependent on the importance, security and risk level, the processing of some embodiments may offer different protection levels. Embodiments may cover applications to monitor constructions, e.g. bridges, environment engineering, e. g. weather, water, seismic, traffic capturing, private and public security, e.g. presence sensor up to CCTV, home automation, energy/utility data processing and related actions, etc.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for processing", etc., may be provided through the use of dedicated hardware, such as "a controller", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. A control apparatus (10) operable to coordinate storage of a data packet at at least two data storage entities (40) of a communication network (60), the apparatus (10) comprising:
a control module (12) operable to:
determine information related to a segmentation of the data packet into at least two data packet segments, and
determine information related to the at least two different data storage entities (40), the at least two different data storage entities being operable to store the at least two data packet segments; and
one or more interfaces (14) operable to communicate the information related to the segmentation and the information related to the at least two storage entities (40) to an application device (20) and to a determination device (30).

2. The control apparatus (10) of claim 1, wherein the control module (12) is further operable to determine information related to a hopping sequence, the information related to the hopping sequence comprising information on a time sequence of different data storage entities (40) at which a data packet segment is to be stored; and wherein the one or more interfaces (14) are operable to communicate the information related to the hopping sequence to the application device (20) and to the determination device (30).

3. The control apparatus (10) of claim 1, wherein the control module (12) is further operable to determine information related to data encryption, decryption, or integrity for the segments of the data packet and wherein the one or more interfaces (14) are operable to provide the information related to data encryption, decryption, or integrity to the application device (20) or the determination device (30).

4. The control apparatus (10) of claim 1, wherein the one or more interfaces (14) are operable to receive information related to an attack from the application device (20) or from the determination device (30), and wherein the control module (12) is operable to re-initiate the application device (20) or the determination device (30) upon reception of the information related to the attack, or
wherein the control module (12) is further operable to determine information related to backup storage entities (50) for storing backup copies of the data packet segments in the communication network (60), and wherein the one or more interfaces (14) is/are operable to provide the information on the backup storage entities (50) to the application device (20) and to the determination device (30).

5. An application apparatus (20) operable to process a data packet for communication with at least two data storage entities (40) of a communication network (60), the apparatus (20) comprising
one or more interfaces (22) operable to receive information related to a segmentation of the data packet and information related to the at least two different data storage entities (40), the at least two different data storage entities (60) being operable to store the at least two data packet segments, from a control device (10), and the one or more interfaces (22) being operable to communicate with the at least two different data storage entities (40); and
a processing module (24) operable to:
assemble the data packet using the at least two data packet segments received from the at least two different data storage entities (40) based on the information related to the segmentation of the data packet and the information related to the at least two different data storage entities (40) from the control device (10), or
disassemble the data packet into at least two data packet segments for storage at the at least two different data storage entities (40) based on the information related to the segmentation of the data packet and the information related to the at least two different data storage entities (40) from the control device (10).

6. The application apparatus (20) of claim 5, wherein the one or more interfaces (22) are operable to receive information related to a hopping sequence from the control device (10), the information related to the hopping sequence comprising information on a time sequence of different data storage entities (40) at which a data packet segment is to be stored, and wherein the processing module (24) is operable to store or to receive the data packet segments at/from the different data storage entities (40) according to the information related to the hopping sequence.

7. The application apparatus (20) of claim 5, wherein the one or more interfaces (22) are operable to receive information related to data encryption, decryption, or integrity for the segments of the data packet from the control device (10), and wherein the processing module (24) is further operable to decrypt or integrity check the data packet segments prior to assembly of the data packet based on the information related to data encryption, decryption, or integrity for the segments of the data packet, or wherein the processing module (24) is operable to encrypt or to apply a digital signature to the at least two data packet segments after disassembly of the data packet based on the information related to data encryption, decryption, or integrity for the segments of the data packet.

8. The application apparatus (20) of claim 5, further comprising a control module (26) operable to monitor the processing module (24) and to detect an attack on the processing module (24), wherein the control module (26) is further operable to generate information related to the attack, and wherein the one or more interfaces (22) are operable to communicate the information related to the attack to the control device (10), or
wherein the one or more interfaces (22) are operable to receive information related to backup storage entities (50) for storing backup copies of the data packet segments in the communication network (60), and wherein the processing module (24) is operable to store or to receive the backup copies of the data packet segments at/from the backup storage entities (50) according to the information related to backup storage entities (50).

9. A data determination apparatus (30) operable to determine a data packet for communication with at least two data storage entities (40) of a communication network (60), the apparatus (30) comprising
one or more interfaces (32) operable to receive information related to a segmentation of the data packet and information related to at least two different data storage entities (40) from a control device (10), the at least two different data storage entities (60) being operable to store the at least two data packet segments, and the one or more interfaces (32) being operable to communicate with the at least two different data storage entities (40); and
a processing module (34) operable to:
assemble the data packet using the at least two data packet segments received from the at least two different data storage entities (40) based on the information related to the segmentation of the data packet and the information related to the at least two different data storage entities (40) from the control device (10), or
disassemble the data packet into at least two data packet segments for storage at the at least two different data storage entities (40) based on the information related to the segmentation of the data packet and the information related to the at least two different data storage entities (40) from the control device (10).

10. The data determination apparatus (30) of claim 9, wherein the one or more interfaces (32) is/are operable to receive information related to a hopping sequence from the control device (10), the information related to the hopping sequence comprising information on a time sequence of different data storage entities at which a data packet segment is to be stored, and wherein the processing module (34) is operable to store or to receive the data packet segments at/from the different data storage entities (40) according to the information related to the hopping sequence, or
wherein the one or more interfaces (32) is/are operable to receive information related to data encryption, decryption, or integrity for the segments of the data packet from the control device (10), and wherein the processing module (34) is further operable to decrypt or integrity check the data packet segments prior to assembly of the data packet based on the information related to data encryption, decryption, or integrity for the segments of the data packet, or wherein the processing module (24) is operable to encrypt or to apply a digital signature to the at least two data packet segments after disassembly of the data packet based on the information related to data encryption, decryption, or integrity for the segments of the data packet.

11. The data determination apparatus (30) of claim 9, further comprising a control module (36) operable to monitor the processing module (34) and to detect an attack on the processing module (34), wherein the control module (36) is further operable to generate information related to the attack, and wherein the one or more interfaces (32) is/are operable to communicate the information related to the attack to the control device (10), or
wherein the one or more interfaces (32) is/are operable to receive information related to backup storage entities (50) for storing backup copies of the data packet segments in the communication network, and wherein the processing module (34) is operable to store or to receive the backup copies of the data packet segments at/from the backup storage entities (50) according to the information related to backup storage entities (50).

12. A method for coordinating storage of a data packet at at least two data storage entities (40) of a communication network (60), the method comprising
determining (42) information related to a segmentation of the data packet into at least two data packet segments;
determining (44) information related to the at least two different data storage entities (40), the at least two different data storage entities (40) being operable to store the at least two data packet segments; and
communicating (46) the information related to the segmentation and the information related to the at least two data storage entities (40) to an application device (20) and to a determination device (30) for the data packet.

13. A method for processing a data packet for communication with at least two data storage entities (40) of a communication network (60), the method comprising receiving (52) information related to a segmentation of the data packet and information related to the at least two different data storage entities (40), the at least two different data storage entities (40) being operable to store the at least two data packet segments, from a control device (10);
communicating (54) with the at least two different data storage entities (40); and
assembling (56a) the data packet using the at least two data packet segments received from the at least two different data storage entities (40) based on the information related to the segmentation of the data packet and the information related to the at least two different data storage entities (40) from the control device (10), or
disassembling (56b) the data packet into at least two data packet segments for storage at the at least two different data storage entities (40) based on the information related to the segmentation of the data packet and the information related to the at least two different data storage entities (40) from the control device (10).

14. A method for determining a data packet for communication with at least two data storage entities (40) of a communication network (60), the method comprising
receiving (62) information related to a segmentation of the data packet and information related to the at least two different data storage entities (40) from a control device (10), the at least two different data storage entities (40) being operable to store at least two data packet segments;
communicating (64) with the at least two different data storage entities (40); and
assembling (66a) the data packet using the at least two data packet segments received from the at least two different data storage entities (40) based on the information related to the segmentation of the data packet and the information related to the at least two different data storage entities (40) from the control device (10), or
disassembling (66b) the data packet into at least two data packet segments for storage at the at least two different data storage entities (40) based on the information related to the segmentation of the data packet and the information related to the at least two different data storage entities (40) from the control device (10).

15. A computer program having a program code for performing one of the methods of claims 12, 13 or 14, when the computer program is executed on a computer or processor.

## Amended claims

### Amended claims in accordance with Rule 137(2) EPC.

1. A control apparatus (10) operable to coordinate storage of a data packet at at least two data storage entities (40) of a communication network (60), the apparatus (10) comprising:
a control module (12) operable to:
determine information related to a segmentation of the data packet into at least two data packet segments, and
determine information related to the at least two different data storage entities (40), the at least two different data storage entities being operable to store the at least two data packet segments; and
one or more interfaces (14) operable to communicate the information related to the segmentation and the information related to the at least two storage entities (40) to an application device (20) and to a determination device (30).

2. The control apparatus (10) of claim 1, wherein the control module (12) is further operable to determine information related to a hopping sequence, the information related to the hopping sequence comprising information on a time sequence of different data storage entities (40) at which a data packet segment is to be stored; and wherein the one or more interfaces (14) are operable to communicate the information related to the hopping sequence to the application device (20) and to the determination device (30).

3. The control apparatus (10) of claim 1, wherein the control module (12) is further operable to determine information related to data encryption, decryption, or integrity for the segments of the data packet and wherein the one or more interfaces (14) are operable to provide the information related to data encryption, decryption, or integrity to the application device (20) or the determination device (30).

4. The control apparatus (10) of claim 1, wherein the one or more interfaces (14) are operable to receive information related to an attack from the application device (20) or from the determination device (30), and wherein the control module (12) is operable to re-initiate the application device (20) or the determination device (30) upon reception of the information related to the attack, or
wherein the control module (12) is further operable to determine information related to backup storage entities (50) for storing backup copies of the data packet segments in the communication network (60), and wherein the one or more interfaces (14) is/are operable to provide the information on the backup storage entities (50) to the application device (20) and to the determination device (30).

5. An application apparatus (20) operable to process a data packet for communication with at least two data storage entities (40) of a communication network (60), the apparatus (20) comprising
one or more interfaces (22) operable to receive information related to a segmentation of the data packet and information related to the at least two different data storage entities (40), the at least two different data storage entities (40) being operable to store the at least two data packet segments, from a control device (10), and the one or more interfaces (22) being operable to communicate with the at least two different data storage entities (40); and
a processing module (24) operable to:
assemble the data packet using the at least two data packet segments received from the at least two different data storage entities (40) based on the information related to the segmentation of the data packet and the information related to the at least two different data storage entities (40) from the control device (10), or
disassemble the data packet into at least two data packet segments for storage at the at least two different data storage entities (40) based on the information related to the segmentation of the data packet and the information related to the at least two different data storage entities (40) from the control device (10).

6. The application apparatus (20) of claim 5, wherein the one or more interfaces (22) are operable to receive information related to a hopping sequence from the control device (10), the information related to the hopping sequence comprising information on a time sequence of different data storage entities (40) at which a data packet segment is to be stored, and wherein the processing module (24) is operable to store or to receive the data packet segments at/from the different data storage entities (40) according to the information related to the hopping sequence.

7. The application apparatus (20) of claim 5, wherein the one or more interfaces (22) are operable to receive information related to data encryption, decryption, or integrity for the segments of the data packet from the control device (10), and wherein the processing module (24) is further operable to decrypt or integrity check the data packet segments prior to assembly of the data packet based on the information related to data encryption, decryption, or integrity for the segments of the data packet, or wherein the processing module (24) is operable to encrypt or to apply a digital signature to the at least two data packet segments after disassembly of the data packet based on the information related to data encryption, decryption, or integrity for the segments of the data packet.

8. The application apparatus (20) of claim 5, further comprising a control module (26) operable to monitor the processing module (24) and to detect an attack on the processing module (24), wherein the control module (26) is further operable to generate information related to the attack, and wherein the one or more interfaces (22) are operable to communicate the information related to the attack to the control device (10), or
wherein the one or more interfaces (22) are operable to receive information related to backup storage entities (50) for storing backup copies of the data packet segments in the communication network (60), and wherein the processing module (24) is operable to store or to receive the backup copies of the data packet segments at/from the backup storage entities (50) according to the information related to backup storage entities (50).

9. A data determination apparatus (30) operable to determine a data packet for communication with at least two data storage entities (40) of a communication network (60), the apparatus (30) comprising
one or more interfaces (32) operable to receive information related to a segmentation of the data packet and information related to at least two different data storage entities (40) from a control device (10), the at least two different data storage entities (40) being operable to store the at least two data packet segments, and the one or more interfaces (32) being operable to communicate with the at least two different data storage entities (40); and
a processing module (34) operable to:
assemble the data packet using the at least two data packet segments received from the at least two different data storage entities (40) based on the information related to the segmentation of the data packet and the information related to the at least two different data storage entities (40) from the control device (10), or
disassemble the data packet into at least two data packet segments for storage at the at least two different data storage entities (40) based on the information related to the segmentation of the data packet and the information related to the at least two different data storage entities (40) from the control device (10).

10. The data determination apparatus (30) of claim 9, wherein the one or more interfaces (32) is/are operable to receive information related to a hopping sequence from the control device (10), the information related to the hopping sequence comprising information on a time sequence of different data storage entities at which a data packet segment is to be stored, and wherein the processing module (34) is operable to store or to receive the data packet segments at/from the different data storage entities (40) according to the information related to the hopping sequence, or
wherein the one or more interfaces (32) is/are operable to receive information related to data encryption, decryption, or integrity for the segments of the data packet from the control device (10), and wherein the processing module (34) is further operable to decrypt or integrity check the data packet segments prior to assembly of the data packet based on the information related to data encryption, decryption, or integrity for the segments of the data packet, or wherein the processing module (24) is operable to encrypt or to apply a digital signature to the at least two data packet segments after disassembly of the data packet based on the information related to data encryption, decryption, or integrity for the segments of the data packet.

11. The data determination apparatus (30) of claim 9, further comprising a control module (36) operable to monitor the processing module (34) and to detect an attack on the processing module (34), wherein the control module (36) is further operable to generate information related to the attack, and wherein the one or more interfaces (32) is/are operable to communicate the information related to the attack to the control device (10), or
wherein the one or more interfaces (32) is/are operable to receive information related to backup storage entities (50) for storing backup copies of the data packet segments in the communication network, and wherein the processing module (34) is operable to store or to receive the backup copies of the data packet segments at/from the backup storage entities (50) according to the information related to backup storage entities (50).

12. A method for coordinating storage of a data packet at at least two data storage entities (40) of a communication network (60), the method comprising
determining (42) information related to a segmentation of the data packet into at least two data packet segments;
determining (44) information related to the at least two different data storage entities (40), the at least two different data storage entities (40) being operable to store the at least two data packet segments; and
communicating (46) the information related to the segmentation and the information related to the at least two data storage entities (40) to an application device (20) and to a determination device (30) for the data packet.

13. A method for processing a data packet for communication with at least two data storage entities (40) of a communication network (60), the method comprising receiving (52) information related to a segmentation of the data packet and information related to the at least two different data storage entities (40), the at least two different data storage entities (40) being operable to store the at least two data packet segments, from a control device (10);
communicating (54) with the at least two different data storage entities (40); and
assembling (56a) the data packet using the at least two data packet segments received from the at least two different data storage entities (40) based on the information related to the segmentation of the data packet and the information related to the at least two different data storage entities (40) from the control device (10), or
disassembling (56b) the data packet into at least two data packet segments for storage at the at least two different data storage entities (40) based on the information related to the segmentation of the data packet and the information related to the at least two different data storage entities (40) from the control device (10).

14. A method for determining a data packet for communication with at least two data storage entities (40) of a communication network (60), the method comprising
receiving (62) information related to a segmentation of the data packet and information related to the at least two different data storage entities (40) from a control device (10), the at least two different data storage entities (40) being operable to store at least two data packet segments;
communicating (64) with the at least two different data storage entities (40); and
assembling (66a) the data packet using the at least two data packet segments received from the at least two different data storage entities (40) based on the information related to the segmentation of the data packet and the information related to the at least two different data storage entities (40) from the control device (10), or
disassembling (66b) the data packet into at least two data packet segments for storage at the at least two different data storage entities (40) based on the information related to the segmentation of the data packet and the information related to the at least two different data storage entities (40) from the control device (10).

15. A computer program having a program code for performing one of the methods of claims 12, 13 or 14, when the computer program is executed on a computer or processor.
